# EUROPÄISCHE PATENTANMELDUNG

(11) **EP 3 747 678 A1**
(43) Veröffentlichungstag der Anmeldung: **09.12.2020**
(21) Anmeldenummer: 19178925.4
(22) Anmeldetag: 07.06.2019
(51) Int. Cl.: B60J 5/04, B60J 5/06

(54) **KRAFTFAHRZEUG UMFASSEND EINE SCHIEBETÜR**

(71) Anmelder: MAGNA STEYR Fahrzeugtechnik AG & Co KG, 8041 Graz (AT)
(72) Erfinder: HÖRMANN, Reinhard, 8151 Hitzendorf (AT); PLANKA, Franz, 9433 St. Andrä (AT); ZACHNEGGER, Harald, 8041 Graz (AT)
(74) Vertreter: Zangger, Bernd

(57) **Zusammenfassung**

Ein Kraftfahrzeug umfassend eine Schiebetür (1), wobei durch Aufschieben der Schiebetür (1) eine erste Zugangsöffnung in den Innenraum des Kraftfahrzeuges freigegeben wird, wobei in die Schiebetür (1) zumindest ein Schwenktürrahmen (2) mit zumindest einer im Schwenktürrahmen (2) aufgenommenen Schwenktür (3, 4) integriert ist, so dass durch Aufschwenken der Schwenktür (3, 4) eine zweite Zugangsöffnung in den Innenraum des Kraftfahrzeuges freigegeben wird, wobei die zweite Zugangsöffnung ein Teilbereich der ersten Zugangsöffnung ist.

## Beschreibung

### Gebiet der Erfindung

Die vorliegende Erfindung betrifft ein Kraftfahrzeug umfassend eine Schiebetür.

### Stand der Technik

Schiebetüren in Kraftfahrzeugen, die insbesondere Seitenwände der Kraftfahrzeuge zumindest teilweise ausbilden, sind hinlänglich bekannt. Schiebetüren erlauben im Vergleich zu ebenfalls verbreiteten Schwenktüren in Kraftfahrzeugen oft größere Zugangsöffnungen in den Innenraum des Kraftfahrzeuges freizugeben. So kann mittels einer Schiebetür beispielsweise auf einfachere Weise der Zutritt zu zwei Sitzreihen in einem Kraftfahrzeug freigegeben werden.

Es sind auch Kraftfahrzeuge bekannt, deren Innenraum auf einfache Weise umgestaltbar ist, so dass beispielsweise die Anordnung von Sitzen und/oder die Anordnung von Trennwänden im Innenraum des Kraftfahrzeuges änderbar ist. Auf diese Weise können unterschiedliche Sitzkonfigurationen bzw. Innenraumkonzepte in einem einzigen Kraftfahrzeug, bevorzugt auch durch einen Benutzer des Fahrzeuges, je nach aktuellen Erfordernissen, flexibel umgesetzt werden. Je nach aktueller Innenraumkonfiguration kann dann jedoch die Zugangsmöglichkeit in das Fahrzeug durch die vorhandenen Fahrzeugtüren nicht mehr optimal sein.

### Zusammenfassung der Erfindung

Es ist eine Aufgabe der Erfindung, ein Kraftfahrzeug umfassend eine Schiebetür anzugeben, dass unterschiedliche Zugangsmöglichkeiten in den Innenraum des Kraftfahrzeuges bereitstellt, insbesondere für unterschiedliche Innenraumkonfigurationen des Kraftfahrzeuges.

Die Lösung der Aufgabe erfolgt durch ein Kraftfahrzeug umfassend eine Schiebetür, wobei durch Aufschieben der Schiebetür eine erste Zugangsöffnung in den Innenraum des Kraftfahrzeuges freigegeben wird, wobei in die Schiebetür zumindest ein Schwenktürrahmen mit zumindest einer im Schwenktürrahmen aufgenommenen Schwenktür integriert ist, so dass durch Aufschwenken der Schwenktür eine zweite Zugangsöffnung in den Innenraum des Kraftfahrzeuges freigegeben wird, wobei die zweite Zugangsöffnung ein Teilbereich der ersten Zugangsöffnung ist.

Erfindungsgemäß ist mindestens eine Schwenktüre in eine Schiebetür integriert. Dazu ist der erforderliche Rahmen der Schwenktür, in welchem die Schwenktür schwenkbar gelagert ist, in die Schiebetür integriert, so dass der Schwenktürrahmen und die Schwenktür beim Aufschieben der Schiebetür mit dieser mitgeschoben werden.

Da die Schwenktür einen Teil der Schiebetür bildet, wird beim Öffnen der Schwenktür eine Zugangsöffnung in den Innenraum freigegeben, der ein Teilbereich und somit kleiner ist, als die beim Öffnen der Schiebetür entstehende Zugangsöffnung.

Je nach Anordnung der Sitze und gegebenenfalls von Trennwänden im Inneren des Kraftfahrzeuges, kann auf diese Weise entweder eine kleinere Zugangsöffnung mittels Schwenktür freigegeben werden, beispielsweise für den Zutritt nur zu einer bestimmten Sitzreihe im Kraftfahrzeug, ohne durch Öffnen der Schiebetür eine größere Zugangsöffnung freigegeben werden, wodurch der Einstieg erleichtert werden kann, beispielsweise für mehrere Fahrgäste gleichzeitig oder für einen Rollstuhlfahrer. Erfindungsgemäß muss die Türstruktur des Kraftfahrzeuges für die unterschiedlichen Zugangsmöglichkeiten nicht umgebaut werden.

Vorzugsweise umgibt der Schwenktürrahmen vollumfänglich die Schwenktür. Der Schwenktürrahmen - und somit auch die Schiebetüre - umgibt dann die gesamte Schwenktür. In einer alternativen Ausführung umgibt der Schwenktürrahmen die Schwenktür nur teilumfänglich. Beispielsweise wird die Schwenktür an zumindest einer Seite von keinem Schwenktürrahmenteil umschlossen.

Bevorzugt sind in die Schiebetür zwei Schwenktüren integriert, so dass durch Aufschwenken einer der beiden Schwenktüren die zweite Zugangsöffnung in den Innenraum des Kraftfahrzeuges freigegeben wird, und durch Aufschwenken der anderen der beiden Schwenktüren eine dritte Zugangsöffnung in den Innenraum des Kraftfahrzeuges freigegeben wird, wobei die zweite und dritte Zugangsöffnung jeweils Teilbereiche der ersten Zugangsöffnung sind. In die Schiebetür sind dann zwei eigenständige Schwenktüren integriert. Jede der Schwenktüren gibt den Zugang zu einem anderen Bereich des Innenraums des Kraftfahrzeuges frei. Beim Öffnen der Schiebetür wird eine größere Zugangsöffnung freigegeben, die die beiden Zugangsöffnungen der Schwenktüren umfasst.

Die beiden Schwenktüren sind bevorzugt in den Schwenktürrahmen aufgenommen oder sind in zwei Schwenktürrahmen aufgenommen, so dass jede der Schwenktüren einen eigenen Schwenktürrahmen nutzt. Der gemeinsame Schwenktürrahmen oder beide Schwenktürrahmen sind in die Schiebetür integriert. Der gemeinsame Schwenktürrahmen kann beide Schwenktüren vollumfänglich umgeben oder eine oder beide Schwenktüren nur teilumfänglich umgeben. Alternativ können die beiden Schwenktürrahmen vollumfänglich oder teilumfänglich ihre jeweiligen Schwenktüren umgeben.

Vorzugsweise umfasst die Schiebetür, insbesondere der Schwenktürrahmen, eine B-Säule und/oder eine C-Säule des Kraftfahrzeuges. Die B-Säule und/oder die C-Säule wird somit durch die Schiebetür ausgebildet.

Vorzugsweise ist die Schwenktür mittels zumindest einem Türscharnier, vorzugsweise zweier Türscharniere, im Schwenktürrahmen öffenbar und schließbar, also über die Scharniere im Schwenktürrahmen gelagert.

Die Schiebetür ist bevorzugt mittels einer Schienenführung in einem oberen und / oder einem mittleren und / oder einem unteren Seitenbereich des Kraftfahrzeuges öffenbar und schließbar. Bevorzugt sind zwei Schienenführungen zur Führung der Schiebetür ausgebildet, alternativ kann auch nur eine einzige Schienenführung für die Schiebetür ausgebildet sein.

Die Schiebetür bildet bevorzugt einen Teil der Seitenwand des Kraftfahrzeuges. Beim Öffnen der Schiebetür wird diese vorzugsweise zunächst nach außen, vor die Ebene der übrigen Seitenwand des Kraftfahrzeugs, geführt, und dann im Wesentlichen parallel entlang der übrigen Seitenwand geführt. Die Schwenktür oder die beiden Schwenktüren machen diese Bewegung der Schiebetür beim Öffnen der Schiebetür mit.

Vorzugsweise ist eine Trennwand im Kraftfahrzeug angeordnet, die den durch die zweite Zugangsöffnung zugänglichen Innenraum des Kraftfahrzeuges, von dem durch die dritte Zugangsöffnung zugänglichen Innenraum des Kraftfahrzeuges abtrennt. Die Trennwand ist besonders bevorzugt zumindest teilweise entfernbar. Wenn die Trennwand die Innenraumbereiche nicht abtrennt kann der Zutritt bevorzugt durch Öffnen der Schiebetür erfolgen, wenn die Trennwand in Gebrauchsstellung ist und somit die Innenraumbereiche abtrennt, kann der Zutritt bevorzugt über das Öffnen der Schwenktür oder der beiden Schwenktüren erfolgen.

In einer alternativen Ausführung können in die Schiebetür auch mehr als zwei Schwenktüren integriert sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Kraftfahrzeugs umfassend eine Schiebetür, in einem Zustand mit geöffneten Schwenktüren.
- Fig. 2: ist eine dreidimensionale Darstellung eines erfindungsgemäßen Kraftfahrzeugs umfassend eine Schiebetür, in einem Zustand mit geschlossenen Türen.
- Fig. 3: ist eine dreidimensionale Darstellung eines erfindungsgemäßen Kraftfahrzeugs umfassend eine Schiebetür, in einem Zustand während der Öffnung der Schiebetür.
- Fig. 4: ist eine dreidimensionale Darstellung eines erfindungsgemäßen Kraftfahrzeugs umfassend eine Schiebetür, in einem Zustand mit geöffneter Schiebetür.
- Fig. 5: ist eine Teildarstellung des Kraftfahrzeugs gemäß Fig. 4.
- Fig. 6: ist eine dreidimensionale Darstellung eines weiteren erfindungsgemäßen Kraftfahrzeugs umfassend eine Schiebetür, in einem Zustand mit geschlossenen Türen, mit einer ersten Sitzkonfiguration, wobei das Kraftfahrzeug transparent dargestellt ist.
- Fig. 7: ist eine Darstellung des Kraftfahrzeugs gemäß Fig. 6, wobei die Schiebetür geöffnet ist.
- Fig. 8: ist eine Darstellung des Kraftfahrzeugs gemäß Fig. 7, wobei das Kraftfahrzeug nicht transparent dargestellt ist.
- Fig. 9: ist eine dreidimensionale Darstellung eines weiteren erfindungsgemäßen Kraftfahrzeugs umfassend eine Schiebetür, in einem Zustand mit geschlossenen Türen, mit einer zweiten Sitzkonfiguration, wobei das Kraftfahrzeug transparent dargestellt ist.
- Fig. 10: ist eine Darstellung des Kraftfahrzeugs gemäß Fig. 9, wobei die beiden Schwenktüren geöffnet sind.
- Fig. 11: ist eine Darstellung des Kraftfahrzeugs gemäß Fig. 10, wobei das Kraftfahrzeug nicht transparent dargestellt ist.

### Detaillierte Beschreibung der Erfindung

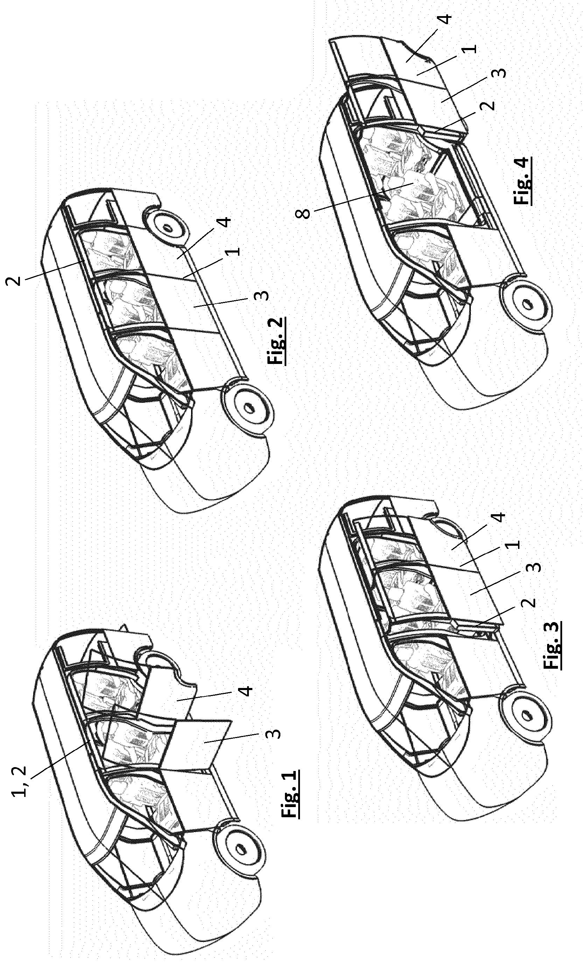

In Fig. 1 ist ein erfindungsgemäßes Kraftfahrzeug umfassend eine Schiebetür 1 dargestellt. In die Schiebetür 1 ist ein Schwenktürrahmen 2 integriert. In den Schwenktürrahmen 2 sind zwei Schwenktüren 3 und 4 integriert.

Die beiden Schwenktüren 3 und 4 sind in Fig. 1 in einem geöffneten Zustand dargestellt. Die Schwenktüren 3 und 4 sind daher aufgeschwenkt. Die Schiebetür 1 ist dabei geschlossen.

Durch Aufschwenken der beiden Schwenktüren 3 und 4 werden Zugangsöffnungen in den Innenraum des Kraftfahrzeuges freigegeben, die ein Einsteigen und Aussteigen aus dem Kraftfahrzeug erlauben.

Das selbe Kraftfahrzeug ist in Fig. 2 in einem Zustand mit geschlossenen Türen dargestellt. Hier ist sowohl die Schiebetür 1 geschlossen, als auch die beiden Schwenktüren 3 und 4. Die Schiebetür 1 und somit auch die Schwenktüren 3 und 4 liegen zusammen mit übrigen Seitenteilen des Kraftfahrzeuges im Wesentlichen in einer Ebene und bilden so einen Teil einer Seitenwand des Kraftfahrzeuges.

Das selbe Kraftfahrzeug befindet sich in Fig. 3 in einem Zustand während der Öffnung der Schiebetür. Die Schwenktüren 3 und 4 sind geschlossen. Die Schiebetür 1 ist aber entriegelt und aus der Ebene der Seitenwand des Kraftfahrzeuges herausgeführt.

In Fig. 4 ist die Schiebetür 1 in einem geöffneten Zustand, die Schwenktüren 3, 4 sind geschlossen. Der Innenraum des Kraftfahrzeuges ist gut zugänglich, über eine erste Zugangsöffnung, die durch die geöffnete Schiebetür bereitgestellt wird. Im Gegensatz dazu sind die Zugangsbereiche, die durch die geöffneten Schwenktüren 3, 4 bereitgestellt werden, wie in Fig. 1 dargestellt, kleiner als der durch die Schiebetür freigegebene Zugangsbereich.

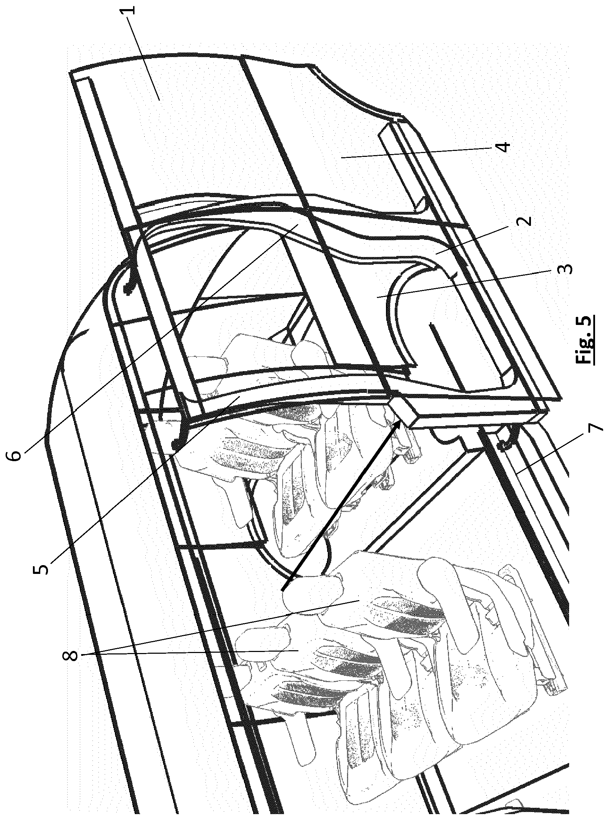

Fig. 5 ist eine Teildarstellung des Kraftfahrzeugs gemäß Fig. 4.

In Fig. 5 ist besser ersichtlich, dass die beiden Schwenktüren 3, 4 in den gemeinsamen Schwenktürrahmen 2 aufgenommen sind. Der Schwenktürrahmen 2 umgibt zumindest die erste Schwenktür 3 vollumfänglich und bildet für die zweite Schwenktür 4 zumindest den Bereich eines Türrahmens, an dem Türscharniere der Schwenktür 4 befestigt sind. Der Schwenktürrahmen 2 umgibt daher die zweite Schwenktür 4 teilumfänglich.

Der Schwenktürrahmen 2 bildet auch eine B-Säule 5 und eine C-Säule 6 des Kraftfahrzeuges aus.

Die Schwenktüren 3 und 4 sind jeweils mittels zweier Türscharniere im Schwenktürrahmen 2 öffenbar und schließbar.

Die Schiebetür 1 ist mittels einer Schienenführung 7 in einem oberen und einem unteren Seitenbereich des Kraftfahrzeuges öffenbar und schließbar.

Im Innenraum des Kraftfahrzeuges sind Sitze 8 angeordnet.

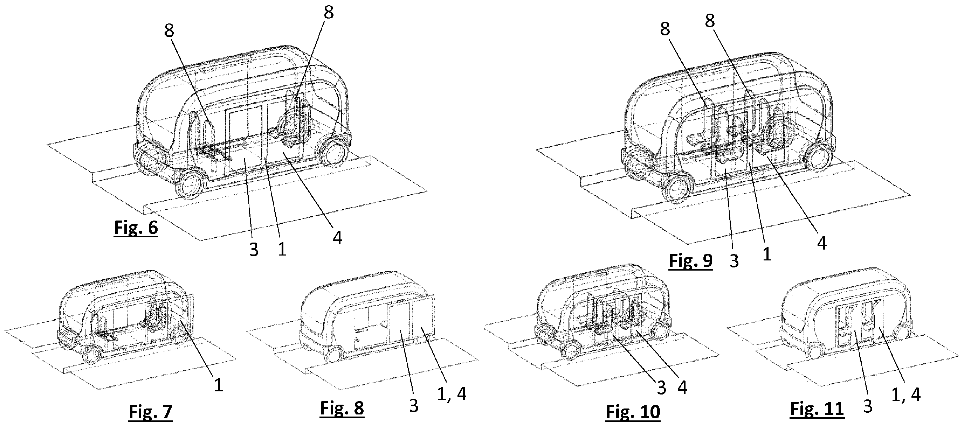

Fig. 6 ist eine Darstellung eines weiteren erfindungsgemäßen Kraftfahrzeugs umfassend eine Schiebetür, in einem Zustand mit geschlossenen Türen, mit einer ersten Sitzkonfiguration, wobei das Kraftfahrzeug transparent dargestellt ist. Die Sitzkonfiguration ist so gewählt, dass sich Passagiere des Kraftfahrzeugs auf den beiden Sitzreihen gegenüber sitzen. Im Fahrbetrieb sind beide Schwenktüren 3, 4 in der Schiebetür 1 verschlossen und die Schiebetüre 1 ist ebenfalls zur Karosserie des Kraftfahrzeugs verschlossen.

Fig. 7. Zeigt das selbe Kraftfahrzeug wie Fig. 6, wobei jedoch die Schiebetür 1 geöffnet ist. In Fig. 8 ist dieses Kraftfahrzeug nicht transparent dargestellt. Die weite Zugangsöffnung bei geöffneter Schiebetür 1 eigenet sich beispielsweise für einen rollstuhlgerechten Zugang zum Kraftfahrzeug oder für ein Beladen des Kraftfahrzeugs mit sperrigen Gütern.

In Fig. 9 ist ein Kraftfahrzeug wie in Fig. 6, mit geschlossenen Türen, dargestellt, jedoch mit einer alternativen Sitzkonfiguration. Die Passagiere sitzen auf den beiden dargestellten Sitzreihen hintereinander.
Die Schwenktüren 3 und 4 können separat geöffnet werden.

Eine Trennwand kann im Kraftfahrzeug angeordnet sein (nicht dargestellt), die den durch die zweite Zugangsöffnung zugänglichen Innenraum des Kraftfahrzeuges, von dem durch die dritte Zugangsöffnung zugänglichen Innenraum des Kraftfahrzeuges abtrennt. Die Trennwand ist zwischen den Sitzreihen angeordnet und reicht bis zu einem Mittelsteg der Schiebetür 1 bzw. bis zu einer Säule des Schwenktürrahmens 2, um abgeschlossene Passagierräume vor und hinter der Trennwand zu erhalten. Die Trennwand ist bevorzugt ganz oder teilweise entfernbar, so dass sie in einer Sitzkonfiguration wie in Fig. 6 dargestellt keinen freien Raum beansprucht.

Fig. 10 ist eine Darstellung des Kraftfahrzeugs gemäß Fig. 9, wobei die beiden Schwenktüren 3, 4 geöffnet sind. In der Fig. 11 ist das Kraftfahrzeug nicht transparent dargestellt.

Die beiden Schwenktüren 3 und 4 ermöglichen einen separaten Zugang zu den Sitzen 8 auf den beiden Sitzreihen und somit den Zugang zu den beiden, beispielsweise mittels Trennwand getrennten, Abteilen.

### Bezugszeichenliste

- 1: Schiebetür
- 2: Schwenktürrahmen
- 3: Schwenktür
- 4: Schwenktür
- 5: B-Säule
- 6: C-Säule
- 7: Schienenführung
- 8: Sitz

## Patentansprüche

1. Kraftfahrzeug umfassend eine Schiebetür (1), wobei durch Aufschieben der Schiebetür (1) eine erste Zugangsöffnung in den Innenraum des Kraftfahrzeuges freigegeben wird,
**dadurch gekennzeichnet, dass** in die Schiebetür (1) zumindest ein Schwenktürrahmen (2) mit zumindest einer im Schwenktürrahmen (2) aufgenommenen Schwenktür (3, 4) integriert ist, so dass durch Aufschwenken der Schwenktür (3, 4) eine zweite Zugangsöffnung in den Innenraum des Kraftfahrzeuges freigegeben wird, wobei die zweite Zugangsöffnung ein Teilbereich der ersten Zugangsöffnung ist.

2. Kraftfahrzeug nach Anspruch 1,
**dadurch gekennzeichnet, dass** der Schwenktürrahmen (2) teil- oder vollumfänglich die Schwenktür (3, 4) umgibt.

3. Kraftfahrzeug nach zumindest einem der vorhergehenden Ansprüche,
**dadurch gekennzeichnet, dass** in die Schiebetür (1) zwei Schwenktüren (3, 4) integriert sind, so dass durch Aufschwenken einer der beiden Schwenktüren (3) die zweite Zugangsöffnung in den Innenraum des Kraftfahrzeuges freigegeben wird, und durch Aufschwenken der anderen der beiden Schwenktüren (4) eine dritte Zugangsöffnung in den Innenraum des Kraftfahrzeuges freigegeben wird, wobei die zweite und dritte Zugangsöffnung jeweils Teilbereiche der ersten Zugangsöffnung sind.

4. Kraftfahrzeug nach Anspruch 3,
**dadurch gekennzeichnet, dass** die beiden Schwenktüren (3, 4) in den Schwenktürrahmen (2) aufgenommen sind oder die beiden Schwenktüren (3, 4) in zwei Schwenktürrahmen aufgenommen sind, wobei beide Schwenktürrahmen in die Schiebetür (1) integriert sind.

5. Kraftfahrzeug nach Anspruch 3 oder 4,
**dadurch gekennzeichnet, dass** eine Trennwand im Kraftfahrzeug angeordnet ist, die den durch die zweite Zugangsöffnung zugänglichen Innenraum des Kraftfahrzeuges, von dem durch die dritte Zugangsöffnung zugänglichen Innenraum des Kraftfahrzeuges abtrennt, wobei die Trennwand bevorzugt zumindest teilweise entfernbar ist.

6. Kraftfahrzeug nach zumindest einem der vorhergehenden Ansprüche,
**dadurch gekennzeichnet, dass** die Schiebetür (1), insbesondere der Schwenktürrahmen (2), eine B-Säule (5) und/oder eine C-Säule (6) des Kraftfahrzeuges umfasst.

7. Kraftfahrzeug nach zumindest einem der vorhergehenden Ansprüche,
**dadurch gekennzeichnet, dass** die Schwenktür (3, 4) mittels zumindest einem Türscharnier, vorzugsweise zweier Türscharniere, im Schwenktürrahmen (2) öffenbar und schließbar ist und/oder dass die Schiebetür (1) mittels einer Schienenführung (7) in einem oberen und / oder einem mittleren und / oder einem unteren Seitenbereich des Kraftfahrzeuges öffenbar und schließbar ist.
